# EUROPEAN PATENT SPECIFICATION

(11) **EP 1 021 117 B1**
(45) Date of publication and mention of the grant of the patent: **27.08.2003**
(21) Application number: 98946570.3
(22) Date of filing: 07.10.1998
(51) Int. Cl.: A47J 27/21

(54) **IMPROVEMENTS RELATING TO ELECTRICALLY HEATED VESSELS**
VERBESSERUNGEN AN ELEKTRISCH GEHEIZTE KOCHGEFÄSSE
AMELIORATIONS PORTANT SUR DES RECIPIENTS CHAUFFES ELECTRIQUEMENT

(30) Priority: 07.10.1997 GB 9721254; 18.12.1997 GB 9726977
(43) Date of publication of application: 26.07.2000
(60) Divisional application: 03003913.5
(73) Proprietor: OTTER CONTROLS LIMITED, Buxton, Derbyshire SK17 6LA (GB)
(72) Inventor: O'NEILL, Robert Andrew, Buxton, Derbyshire SK17 9NQ (GB); GAETA, Antonio Martin, Buxton, Derbyshire SK17 9AN (GB); WHITE, Ian Geoffrey, Fairfield Road, Derbyshire SK17 7ER (GB); WHITE, John Edwin, Buxton, Derbyshire SK17 9PF (GB); WRAGG, Stephen John, High Peak, Derbyshire SK23 9ST (GB); WRIGHT, Peter Hallam, Norton Green, Stoke-on-Trent ST6 8NW (GB); LINDSTROM, John Jeffrey, Buxton, Derbyshire SK17 9AW (GB)
(74) Representative: Milhench, Howard Leslie
(86) International application number: GB9803000
(87) International publication number: WO99017645

(56) References cited:
- EP-A- 0 285 839
- EP-A- 0 574 310
- WO-A-96/18331
- DE-A- 19 706 216

## Description

### Field of the Invention

This invention concerns improvements relating to electrically heated vessels, particularly electrically powered water heating vessels such as kettles, hot water jugs, pots, pans, urns, laboratory equipment and the like

### Background of the Invention

Electrically powered kettles and hot water jugs have traditionally employed a heating element in the form of a wire wound resistance heater which is mounted with insulation within a tubular metal sheath. Sheathed heating elements of this kind have commonly incorporated an element head plate to which the heating element proper is affixed, and the head plate has provided for the attachment of the heating element to and in the associated appliance, an opening commonly being provided in a wall of the appliance for this purpose.

Planar electrical heating elements are, however, known and have been used for many years as hot plates in coffee making machines. One such planar element consists of an aluminium plate having a sheathed heating element as abovementioned cast or clenched to its underside. Planar heating elements have also been proposed which comprise a resistance heating track formed upon an electrically insulating substrate by printing or by lithographic techniques; one such element comprises a stainless steel substrate which is coated on one side with glass or another electrically insulating material, the resistance heating track being formed on the surface of the glass and then a further electrically insulating layer being formed over the resistance heating track. The fitting of planar heating elements in water heating vessels has been considered to be advantageous, at least aesthetically, since the vessel interior is then free from an intrusive element

Conventionally, techniques for fixing planar heating elements within a plastics bodied water heating vessel have required the vessel body to incorporate an internal flanged portion at the base of the vessel which seats the element mounting plate. The mounting plate can be secured, for example, by means of rivets such as described in US-A-3,308,225 or more preferably, where the element is to be replaceable, by means of an attachment ring of screwed studs as described in our British Patent Application No 9614872.1. The liquid sealing between the element and the body is provided by a gasket seal which is compressed between the element and the flanged portion of the vessel wall by securing of the rivets or screwed studs

A recent trend in jug design is to have the top of the vessel smaller in diameter than its bottom. This causes two problems regarding the assembly of the element to the vessel. Firstly, the element cannot be assembled from the top of the vessel, because the element is larger in diameter than the opening at the top of the vessel. Secondly, whereas previously the mould core, which forms the inside of the vessel, was withdrawn through the top of the vessel, it now has to be withdrawn from the base of the vessel Accordingly, it is no longer possible to provide a conventional flanged portion at the base of the vessel during the moulding process as such a flanged portion would prevent withdrawal of the mould core. The alternative of welding a flange in place as a separate operation of the vessel forming procedure is disadvantageous because it requires expensive process machinery for the welding operation which substantially increases the production costs

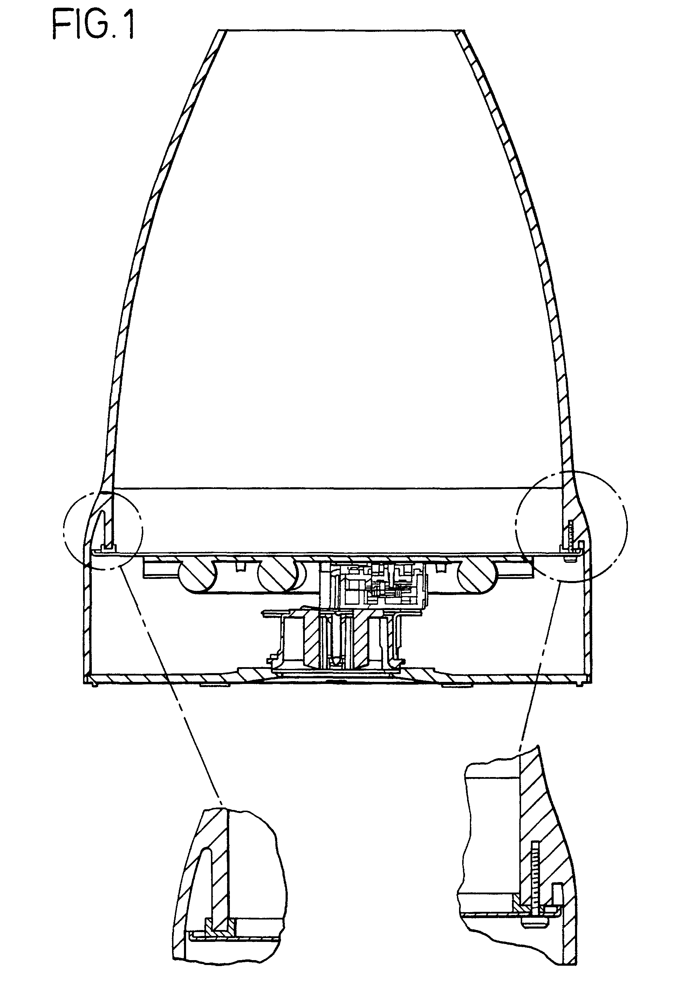

We have attempted to solve this problem by forming screw holes within the vessel wall and securing the element to the vessel by screws passing through holes in the element mounting plate, as shown in Figure 1. However, in order to provide sufficient strength, either an excessive wall thickness is required leading to extra cost and moulding distortion or an unsightly bulge has to be formed on the outside of the vessel, which is also not ideal

In WO-A-9618331 and CA-A-1 202 659 there is described a technique for fixing a planar heating element mounting plate within a plastics bodied water heating vessel, the mounting plate having an upwardly facing channel formation into which a seal is placed and assembled with a downwardly projecting flange of the vessel body. The seal and the flange fit into the channel formation so that the formation is closed in a similar manner to that of an end of a tin can. Figure 2 of WO-A-9618331 and Figure 1 of CA-A-1 202 659 both show the need for thickening of the lower wall of the vessel to accommodate this type of assembly It is in theory possible to use this type of assembly with the above described new types of tapered vessels and to make the wall thickening internal. However, the thickening required causes some distortion of the vessel exterior and the taper angle of the vessel body is required to be large enough to ensure that the thickened wall portion does not extend too far up the side of the vessel. A further disadvantage of this approach is that disassembly of the element from the vessel for repair or reclamation is not possible

In GB-A-2 291 325 a further base mounting assembly is described which is used in the Millennium jug by Pifco Limited. This arrangement relies on an internal flange to which a planar element is clasped by deforming part of the flange around the underside element holding ring. This type of arrangement relies on an internal flange and is not suitable for the abovementioned new type of tapered vessels Furthermore, disassembly of the element for repair or reclamation is not possible.

There are various other problems to be overcome in mounting a planar element to a plastics bodied vessel. For example the vessel body will change diameter by around 1.5mm as the temperature of the water within the vessel rises from cold to boiling; the coefficient of expansion of stainless steel from which the element is usually made is considerably less than that of the vessel body moulding material, usually polypropylene, leading to a change of relative size as the vessel heats up; and the difficulty of maintaining a reasonable tolerance on the vessel body diameter, and indeed keeping it round. This latter problem can easily be underestimated by kettle manufacturers particularly where low cost appliances are being manufactured such as in the Far East.

### Objects and Summary of the Invention

Accordingly it is the principal object of the present invention to overcome or at least substantially reduce the abovementioned problems.

According to the present invention, there is provided an electrically heated vessel comprising a vessel body for containing liquid that is to be heated and a planar heating element secured against abutment means provided within the vessel body, as known from WO-A-9618331, which is characterized in accordance with the invention in that the planar heating element is secured by means of a circlip which engages the vessel body, said circlip either serving as said abutment means or serving to hold the heating element against said abutment means.

The circlip may locate inside or outside of the vessel and may have a plurality of peripheral lugs which can interlock with a plurality of apertures provided in the vessel wall. The circlip may be in the form of a split ring provided with sliding overlapping ends at the break to provide a continuous support surface during variation of the ring diameter, preferably with the underlying end of the ring being thicker than the overlying end.

Element locating formations are preferably provided in the vessel body, for example in the form of elongate radial fins extending axially within the vessel body. The fins can be formed as an integral part of the vessel body in the case where the vessel body is a plastics moulding. The element locating formations may assist location of the heating element within the vessel body in the case where the circlip serves as said abutment means, or may serve as the abutment means in the case where the circlip serves to hold the heating element against the abutment means.

The planar heating element may have a diameter substantially matching that of the vessel at the locating formations. Alternatively, the element may have a smaller diameter and an annular mounting flange may be affixed thereto, the combination of the element and the flange having an overall diameter matching that of the vessel at the locating formations.

The element or the element/flange combination preferably has a seal provided around its periphery, the seal having in one form described hereinafter one or more relatively thin resilient radially-extending circumferential fingers or fins which deform to take the shape of the vessel wall against which they are fitted and which absorb a wide range of size and shape variations of the vessel wall. Another advantage of the circumferential fitting of the above seal, is that the element is not in direct physical contact with the vessel walls. Rather, the element only contacts the seal directly. This reduces the risk of heat damage to the vessel walls from the element during, for example, dry boil. In addition, the seal abovementioned needs no other compression, as an 'O' ring would, to make a watertight joint. Furthermore, the seal requires only minimal retention, since the expected applied pressure is very low, in the region of 250mm of water.

When a heating element is used with an annular mounting flange as abovementioned and with a seal, the seal can conveniently be integral with the mounting flange, for example by being bonded thereto through formation of the seal and the mounting flange in a two-stage moulding process.

The seal may comprise an elastomeric thermally insulating material such as silicone rubber and may include a locating groove or other formation for reception and positive accommodation of a circumferential part of the element.

The above-described means of fixing an electric heating element into a vessel body is well adapted for fixing heating elements of the kind comprising a sheathed heating element affixed to the underside of a stainless steel plate, since the steel plate employed is generally of fairly thin gauge and can readily be formed at its periphery to provide a supportive seating for the resilient seal. The stainless steel utilized in such heating element constructions is commonly 0.5mm thick and formed of 18/8 type stainless steel. The same fixing means is not so well suited to thick film heating elements comprising a resistance heating track or layer formed on a stainless steel substrate with electrically insulating layers, commonly of glass, overlying and underlying the resistance heater, the reason for this being that the steel that is employed as the substrate in such heating elements has to be relatively thick in order to be capable of withstanding process temperatures without undue deformation. A thick film element plate is commonly in excess of 1.0mm thickness and formed of a less readily available ferritic type stainless steel and the extra diameter that would be required to form a supportive seating for a resilient seal represents undesirable added expense with little or no additional benefit.

To overcome or at least substantially reduce the abovementioned problem, the possibility exists as abovementioned to employ an annular mounting flange with the heating element as aforementioned. Alternatively, however, according to another embodiment of the present invention the interior of a vessel is provided with an abutment surface extending around its circumference, a resilient sealing ring underlies the abutment surface, a planar heating element is urged inwardly of the vessel so as with its periphery to compress the sealing ring against the abutment surface, and said circlip retains the heating element in place.

As will be described hereinafter by reference to exemplary embodiments, the abovementioned abutment surface can either be integrally formed with the vessel or can be a separate part designed to be inserted into the vessel, in which latter case the sealing ring can also be arranged to seal the juncture of the abutment part with the internal wall of the vessel as well as sealing the juncture of the heating element with the abutment part.

The above and further features of the present invention are set forth with particularity in the appended claims and will become clearer by consideration of the following detailed description of exemplary embodiments of the present invention given with reference to the accompanying drawings.

### Brief Description of the Drawings

Figure 1 is a cross-sectional view of a planar heating element secured in a water heating vessel by means of a direct mounting arrangement which is not within the scope of the present invention;
Figure 2A is a partial cross-sectional view of a planar heating element secured in a water heating vessel in accordance with an embodiment of the present invention;
Figure 2B is an enlarged cross-sectional view of the sealing arrangements between the element and the walls of the appliance shown in Figure 2A;
Figure 3 is an exploded perspective view of the unassembled mounting and sealing arrangements of Figures 2A and 2B;
Figure 4 is an exploded perspective view of an unassembled planar heating element assembly in accordance with a second embodiment of the present invention;
Figures 5A and 5B show, respectively, a partial cross sectional view of the assembled planar heating element of Figure 4 and an enlarged cross-sectional view of the sealing arrangement shown in Figure 5A;
Figures 5C and 5D show, respectively, a partial cross-sectional view orthogonal to Figure 5A of the assembled arrangement shown in Figure 4 and a cross-sectional underside view of the appliance of Figure 5C;
Figure 6A shows a perspective view of an integrated mounting flange and seal arrangement which could be employed in the second embodiment abovementioned, and Figure 6B is a partial cross sectional view of the arrange of Figure 6A;
Figure 7A is a cross sectional view illustrating a third embodiment of the present invention, and Figure 7B is an exploded view of component parts employed in the third embodiment;
Figure 8 shows a sectional, perspective view of a fourth embodiment of the present invention;
Figure 9 shows a sectional, perspective view of a fifth embodiment of the present invention, and
Figure 10 shows an exploded perspective view of the embodiment of Figure 9.

### Detailed Description of the Embodiments

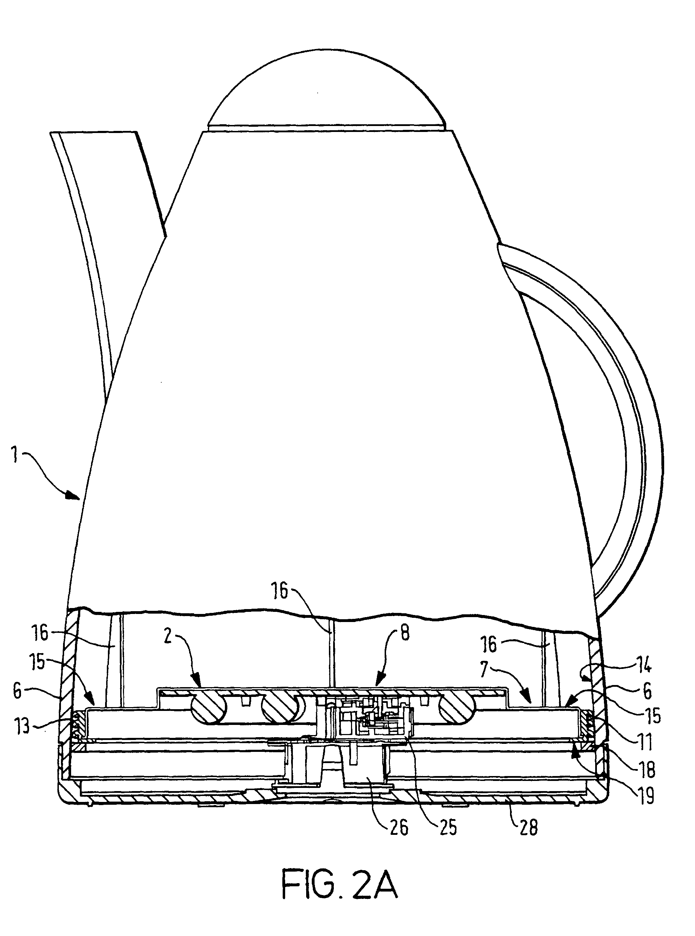

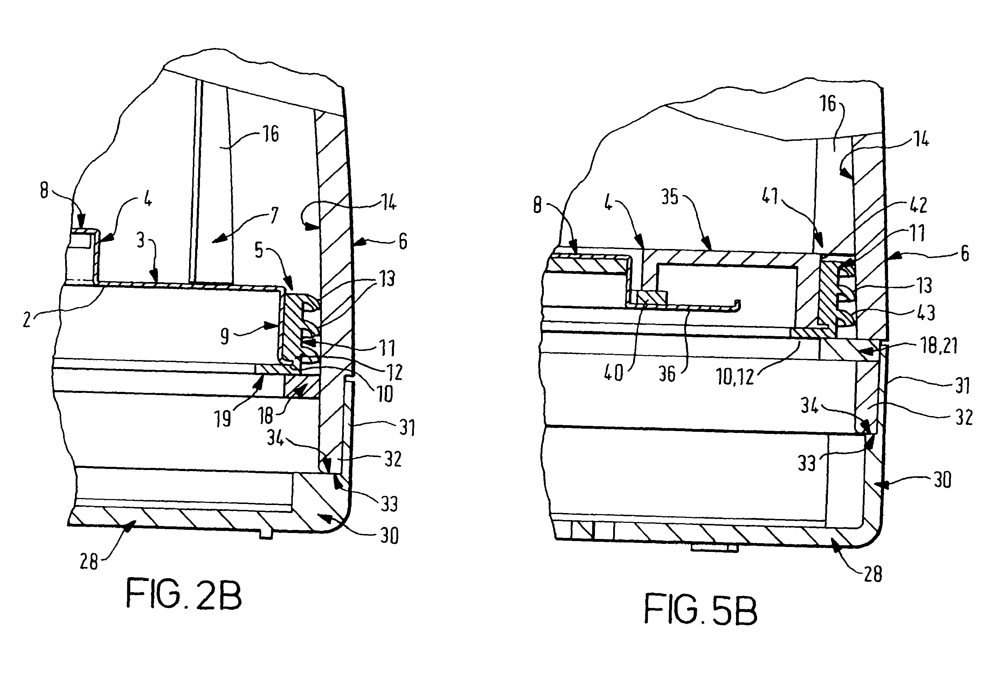

Referring to Figures 2A and 2B. there is shown a water heating vessel 1 and an arrangement for mounting and sealing a non-immersion type, underfloor planar heating element 2 to the vessel 1 of a first embodiment of the present invention. The vessel 1 is of the kind previously described, which has a smaller diameter at a top portion than at a bottom portion thereof. The vessel in question is the vessel part of a cordless electrical water heating appliance which also comprises a base unit (not shown) which, as is well known, serves to power the appliance from the mains electrical supply, there being co-operating electrical connectors provided on the vessel part and on the base unit which come together to power the vessel heating element 2 when the vessel part is properly seated on the base unit.

The planar heating element 2 is of the kind aforementioned which comprises an aluminium plate having a sheathed heating element proper cast or clenched to its undersurface More particularly, the planar heating element 2 has a stepped formation 3 provided at its periphery which has an inner rim 4 and an outer rim 5. When the element 2 is assembled in the vessel 1, the inner rim 4 together with the walls 6 of the vessel 1 form a well 7 around the periphery of the heat generating central part 8 of the element 2 Under certain circumstances, the well 7 retains water and reduces the likelihood of heat generated by the element 2 damaging the plastics vessel moulding.

The outer rim 5 has a vertical face 9 and a short horizontal projection 10 at its end A seal 11 which is made from a resilient rubber is provided around the perimeter of and against the vertical face 9 of the planar heating element 2 The inner diameter of the seal 11 is a close (stretched) fit around the outer rim 5 of the element 2 so as to retain the seal to the element 2 during assembly. The horizontal projection 10 is located in a complementary groove 12 of the seal 11 to further secure and correctly locate the seal 11.

The outer diameter of the seal 11 has three circumferential fins 13 which. when assembled with the vessel 1, engage the inner sealing face 14 of the vessel wall 6. The fins 13 are thin enough to deform as the element 2 is assembled to the vessel 1, but stiff and resilient enough to follow the sealing face 14 of the vessel wall 6 during any subsequent movement caused, for example, by temperature change. The length of each fin 13 is sufficient to provide a sealing engagement over the full range of expected tolerance variations and thermal movement. For example, where the vessel 1 has a lower region diameter of 150mm, each fin 13 has a radial length of 3mm. A fin axial width of approximately 0.5 to 1.0mm provides sufficient stiffness and resilience for a rubber seal of between 40 and 60 Shore A hardness with 3 to 6 fins. Of course, even though the present embodiment has three fins 13, any number of fins 13 from a single fin 13 to a plurality could be provided. The dimensions of each fin 13 can be adjusted accordingly to provide the required sealing characteristics.

The vessel wall 6 in the region of the seal 11 is approximately 4mm in thickness, and is generally vertical, with a minimum draft angle At a position level with the design location of the element upper face 15. six vertical radial fins 16 are moulded around the inner face 14 of the vessel wall 6 These radial fins 16 are of minimum thickness to be consistent with the mouldability of the vessel 1, and to avoid the possibility of sink marks, caused by uneven shrinking during cooling of the moulding, appearing on the outside of the vessel. The design of such features in plastics mouldings is well known, and the standard design rules to be followed to avoid the sharp changes of section which cause such sink marks need not be set out here because these are well known to the skilled person. The bottom faces 17 of these radial fins 16 form a support upto which the element 2 is pushed during assembly to the vessel 1, and form a temporary location for the element 2 while the base components are assembled.

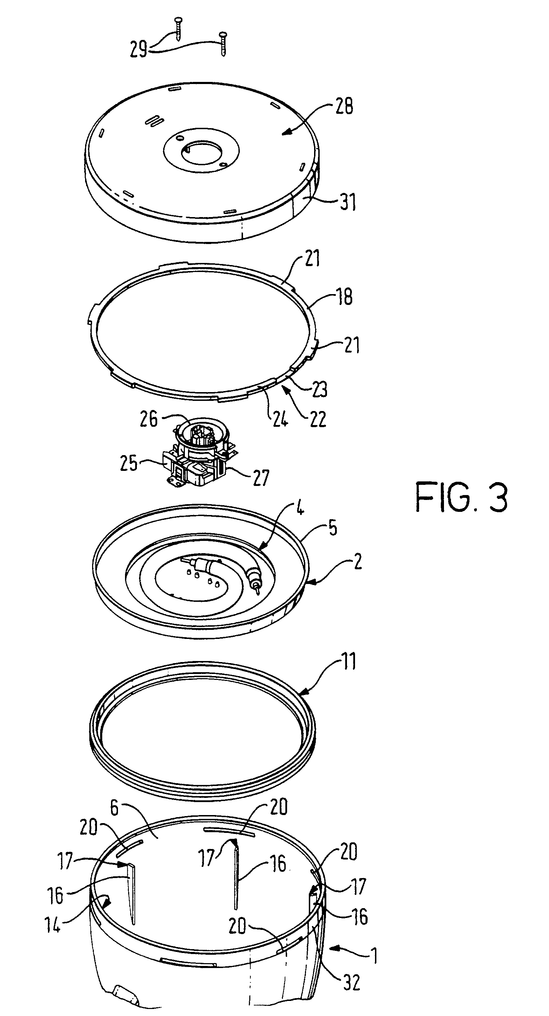

An internal circular clip 18, hereinafter referred to as a circlip, is placed against the bottom face 19 of the seal 11 to secure the element 2 and the seal 11 to the vessel 1 during assembly. Six circumferentially spaced moulded slots 20 are provided in the wall 6 of the vessel 1 at a position corresponding to that of the circlip 18 for securing the element 2 and the seal 11 to the vessel 1 The vertical disposition of the slots 20 in the vessel wall 6 is such as to provide a slight vertical compression of the seal 11 after fitting of the circlip 18. The moulded slots 20 are in line with the separation of the external mould components (not shown), and require no difficult or costly mould construction, such as sliding cores for their formation The circlip 18 has six peripheral lugs 21 which, as the circlip 18 springs into place, locate in the moulded slots 20 thereby locking the circlip 18 to the vessel wall 6 and providing support for the element 2 and the seal 11. The circlip 18 and its accommodating slots 20 in the vessel wall 6 are best shown in Figure 3

The circlip 18 is preferably a moulded plastics component, but could be a metal pressing, designed to combine resilience, to allow compression, with stiffness to ensure a secure fixing The circlip 18 is generally circular and has a circumference/diameter reducing feature 22. The feature 22 is provided to allow the circlip 18 to be compressed so that the outer diameter of the circlip lugs 21 become smaller than the inner diameter of the vessel I in the region of the slots 20. This compression has to take place with the circlip 18 remaining flat, so that the lugs 21 are in the same plane and will enter the slots 20.

In its simplest form, the feature 22 may be a gap in the circlip 18. If this gap is too large, there will be a length of seal 11 which is not fully supported by the circlip 18, which may cause a problem In the present embodiment, the circumference/diameter reducing feature 22 is provided by a break in the circlip 18 with overlapping sliding portions 23,24 at the break, in the manner of a split ring (see Figure 3). The overlapping parts 23,24 have a reduced thickness, to keep the cumulative thickness at the break the same as the rest of the circlip 18. This approach does not fully support the seal 11, but ensures that the seal 11 is always at least partially supported The upper section 23 of the circlip 18 at the break is thinner than that of the lower section 24 and therefore the step in the section in the region of the break as seen by the seal is minimised. If the distance between the slots in the vessel wall 6 is too great, it is possible to stiffen the circlip 18, in a vertical direction. to prevent or minimise distortion due to the load imposed by the seal 11.

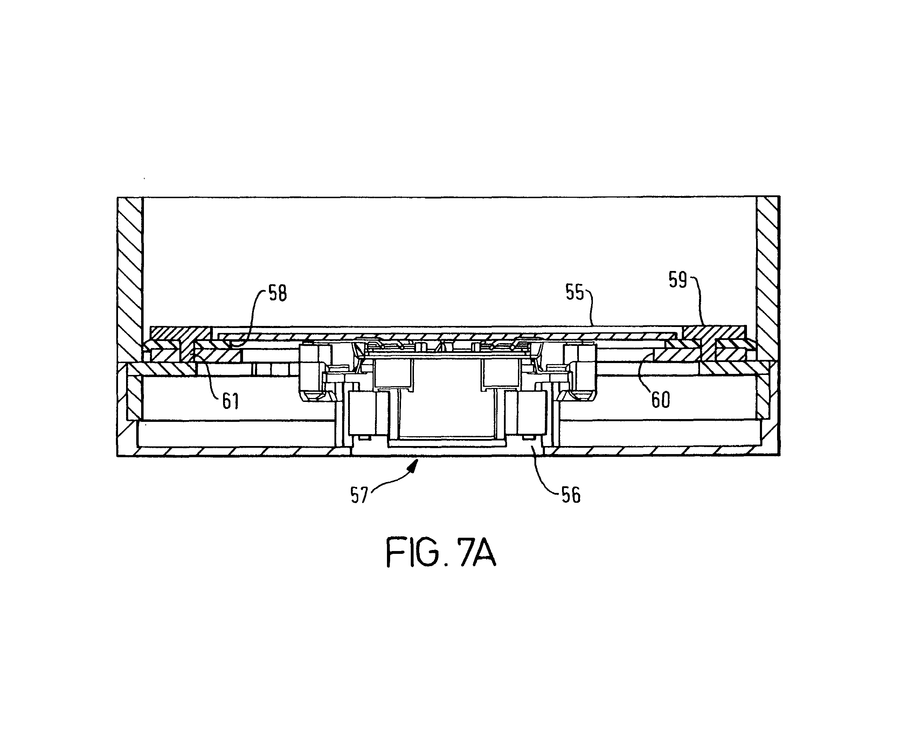

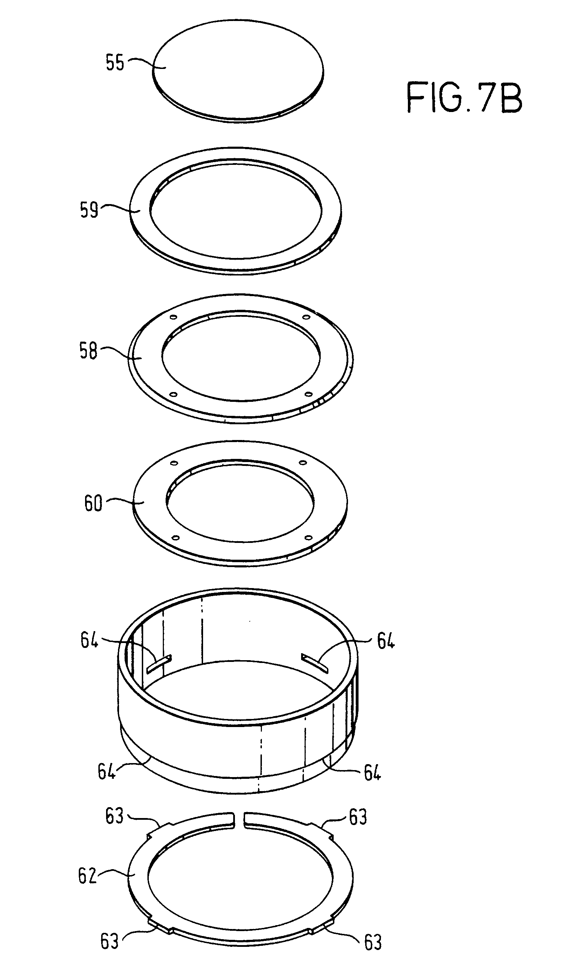

Figure 3 shows an exploded view of the mounting of the heating element 2 to the vessel 1 and shown attached to the central part of the underside of the element 2 is an element protector control 25 adapted to switch off the electrical supply to the heating element 2 in the event of the element temperature rising above a certain safe level; the element protector control 25 is an X-type control manufactured by us and is substantially as described in GB-A-2 283 156 with reference to Figure 1 thereof Also affixed to the underside of the heating element 2 is the vessel connector inlet part 26 of a cordless connection system substantially as described in WO-A- 9406158 with reference to Figures 7 to 11 thereof The method of fixing the element protector control 25 and the connector inlet part 26 to each other and to the heating element 2 is described in our GB -A-2 307 602 and GB-A-2 306 801

The element protector control 25 and the connector inlet part 26 are mounted to the element 2 and each other by a mounting bracket 27. The seal 11 is then secured around the outer rim 6 of the element 2 and this assembly is placed into the vessel 1 to be located against the bottom faces 17 of the radial fins 16 The circlip 18 is placed into the vessel 1 in a compressed condition and is released into the slots 20 to lock the assembly into the vessel 1 An appliance base moulding 28 is then secured to the mounting bracket 27 by way of mounting screws 29 Since the assembly is retained solely by the screws 29 held in the control and connector mounting bracket 27, the appliance is simple to disassemble for repair or for reclamation at the end of its life

The base moulding 28 has, at an upper edge of its peripheral flange 30, a thin vertical projection 31. This projection 31 on assembly, covers the slots 20 in the vessel wall 6, to give a good cosmetic appearance. A lower part 32 of the vessel wall 6 is thinned to allow the base moulding 28 to fit in a flush manner as shown in Figures 2A and 2B The upper edge 33 of the main (thickest) part of the base moulding peripheral flange 28 is arranged to sit against the lower edge 34 of the vessel wall 6. When screws 29 securing the base moulding 28 to the mounting bracket 27 are tightened, the element 2 is pulled down onto the circlip 18 thereby compressing the bottom face 19 of the seal 11 and pulling the circlip 18 down onto the bottom of the slots 20.

As the element 2 is pushed into the vessel 1, the fins 13 of the seal 11 adopt a downwardly sloping attitude As the base moulding 28 is tightened to the mounting bracket 27, the element 2 is pulled downwards slightly. Because of friction and their downward slope, the fins 13 are unable to slide down with the movement of the element 2 and are thus forced firmly against the vessel wall 6. This movement enhances the security of the sealing arrangement

The element 2 and the appliance base moulding 28 are securely clamped to the vessel 1 over the material of the vessel wall 6 below the slots 20. This is thus the only part of the design requiring reasonably close tolerances to control any visible cosmetic gaps between the base moulding 28 and the vessel 1. The element assembly is advantageously also securely located against the forces which might be expected during use of the appliance

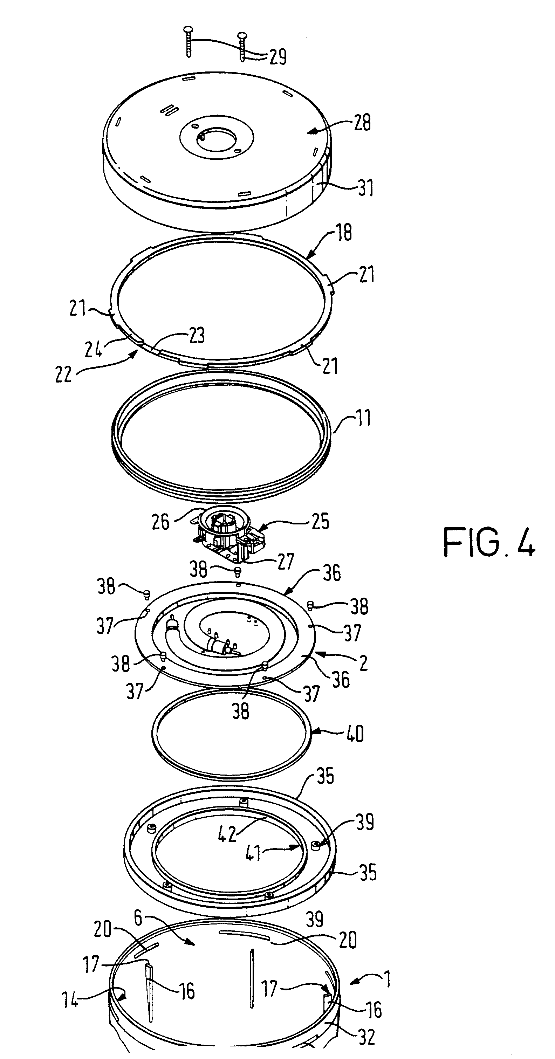

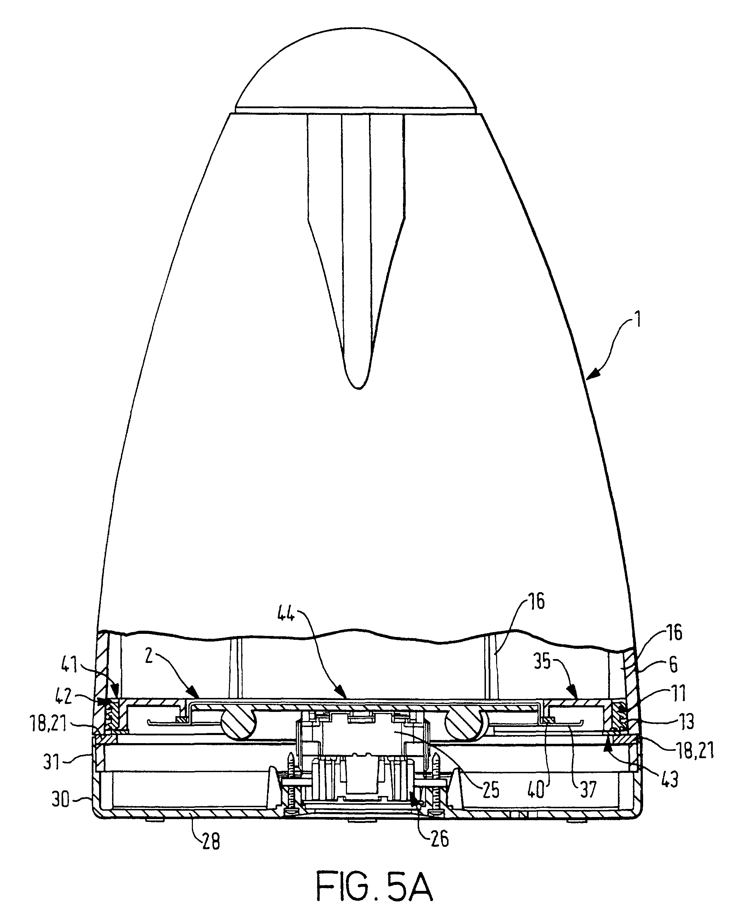

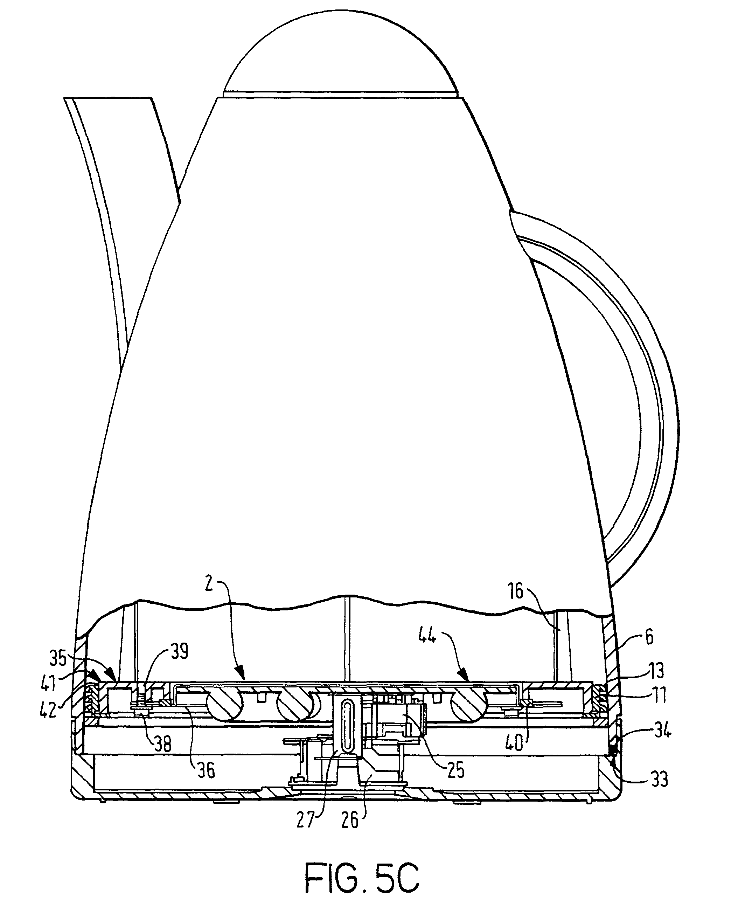

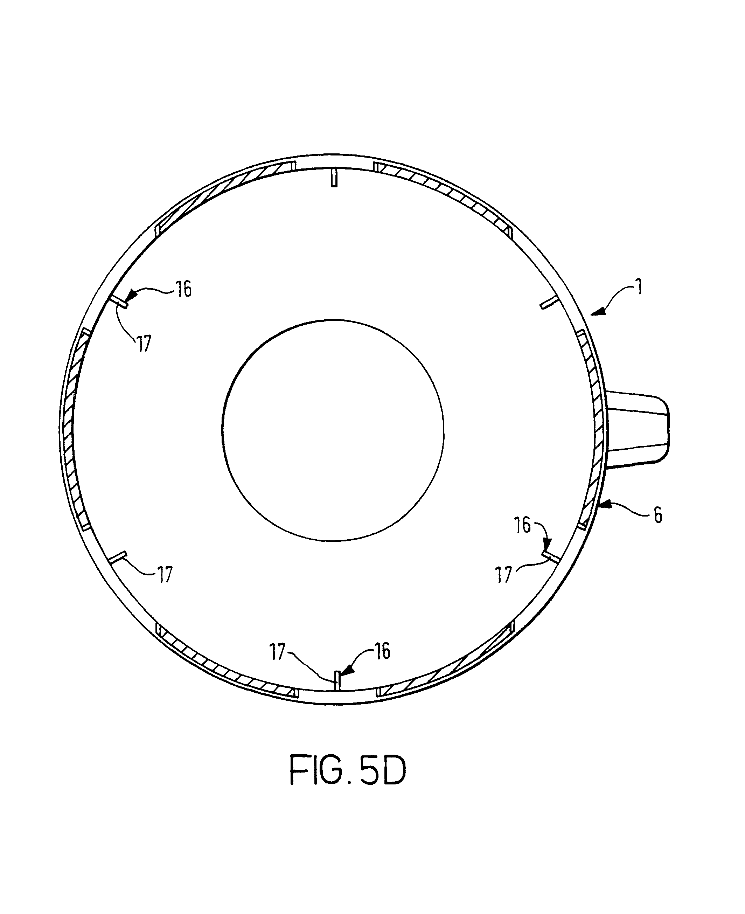

Referring now to Figures 4 and 5A to 5D, there are shown various views of a liquid heating vessel 1 and an arrangement for mounting and sealing a planar heating element 2 to the vessel 1 according to a second embodiment of the present invention. The second embodiment is similar in many aspects to the first embodiment and, to avoid unnecessary repetition, only the differences will be described hereinafter The same reference numerals have been used in describing the same features found in both the first and second embodiments In the second embodiment, the planar heating element 2 is mounted to a mounting flange 35 in a similar manner to that described in British Patent Application No. 9614872.1. More particularly referring to Figure 4, the heating element 2 has a flange periphery 36 formed with holes 37 through which fixing screws 38 are passed and secured in corresponding mounting lugs 39 provided in the mounting flange 35 A gasket seal 40 is provided between the element 2 and the mounting flange 35 for sealing the mechanical joint between the same

Referring now to Figures 5A to 5B where the assembled vessel of Figure 4 is shown, the heating element has a diameter which is smaller than that of the first embodiment element 2, the flange periphery 36 of the element 2 being of a sufficient size for securing the mounting flange 35 but not extending to the vessel wall 6 for direct mounting of the seal 11. Rather, the mounting flange 35 is secured in the well 7 around the element periphery 36 and has an outer rim 41 having a vertical face 42 and a horizontal projection 43 for securely locating the seal 11 The combination of the mounting flange 35 and the element 2 of the second embodiment have the same diameter as the element 2 of the first embodiment.

The second embodiment enables element manufacturers advantageously to produce an element of a fixed diameter which by use of an appropriately sized mounting flange 35, can be adapted to fit various sizes of vessel 1.

As is clearly shown in Figures 5A to 5C, the combination of the mounting flange 35 and the element 2, unlike the first embodiment, provide a completely planar internal base surface 44 to the vessel 1. This may be of greater aesthetic appeal to some customers than the stepped internal base surface of the vessel of the first embodiment. If the mounting flange 35 comprises a thermally insulating material, then the advantage of the well 7 of reducing the effect of heat generated by the element 2 at the vessel wall 6 can still be achieved.

The seal 11 and the mounting flange 25 could be formed integrally, for example by being moulded directly onto the periphery of the flange 35. The flexible seal 11 can either be mechanically joined to the rigid flange 35 by virtue of having moulded features which interlock therewith, or alternatively the seal 11 can be bonded to the flange 35 The rigid flange 35 may be moulded separately and loaded as an insert into the mould which produces the seal 11, or a more complex tool may be used which uses movable inserts to mould first one part and then the other. Alternatively both components could be moulded simultaneously. The moulding technique employed will depend upon the materials being used.

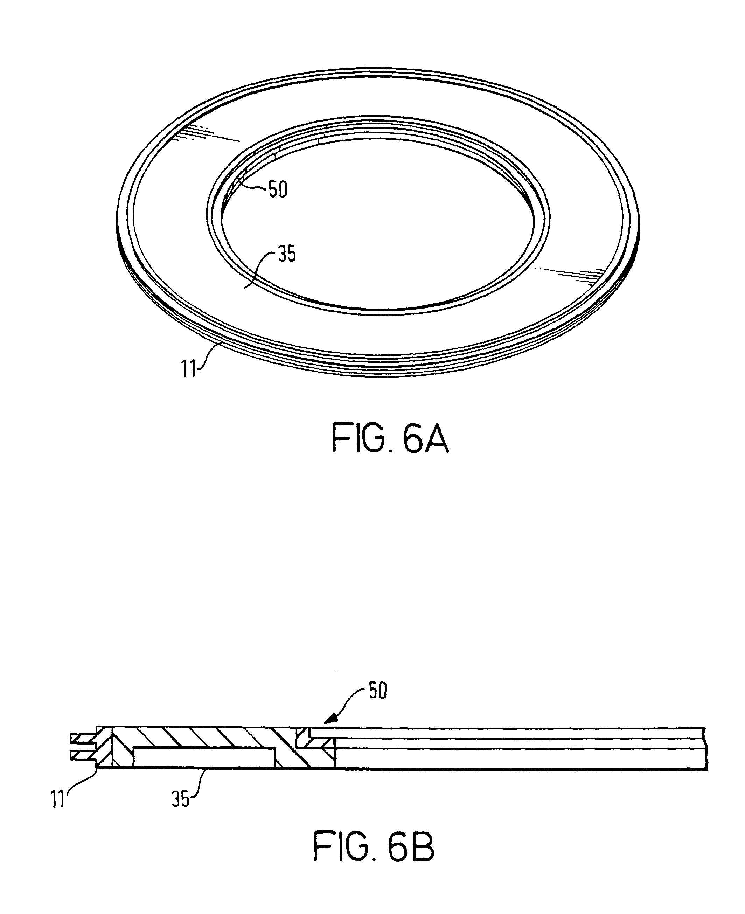

Referring now to Figure 6A, shown therein in perspective view is an integral mounting flange 35 and seal 11 as abovementioned, the arrangement further including an integral L-shaped seal 50 which serves as a seat for the heating element 2 (not shown). The heating element 2 could be dimensioned to make an interference fit with the L-shaped seal 50, more particularly with the upright part of the L-shaped seal 50, and will be pulled down onto the foot of the L-shaped seal to ensure seal integrity when the heating element 2 is mounted into the vessel. In the arrangement of Figures 6A and 6B, the seals 11 and 50 may be formed of an elastomeric material and the mounting flange 35 may be formed of a rigid thermoplastics material

Figures 7A and 7B illustrate a third embodiment of the invention in which a plain elastomer sealing ring is sandwiched between upper and lower seal mouldings formed of rigid thermoplastics material, the elastomer sealing ring extending outwardly beyond the circumference of the superposed upper and lower seal mouldings, which have the same outer diameter, and extending inwardly beyond the inner periphery of the upper seal moulding which has a greater inner diameter than the inner diameter of the lower seal moulding. The planar heating element seats within the upper seal mounting on top of the elastomer sealing ring

In Figure 7A, a planar heating element 55 exemplified as a thick film heating element comprising resistive heating tracks formed on an electrically insulating substrate, a stainless steel plate covered with a layer of glass insulation for example, has an element overtemperature protection control 56 and a supply input connector 57 affixed thereto as aforementioned. An annular elastomeric sealing ring 58, cut from sheet or strip for example, is sandwiched between an upper seal moulding 59 and a lower seal moulding 60, there being clip features 61 provided on the seal mouldings 59 and 60 enabling them to be secured together with the elastomeric seal ring 58 sandwiched tightly and sealingly therebetween. The upper and lower seal mouldings 59 and 60 have the same outer diameter, as shown, and the elastomer sealing ring 58 extends beyond this for sealingly engaging the vessel wall 6 when the heating element and seal assembly is introduced into the vessel. The inner diameters of the upper and lower seal mouldings 59 and 60 are, however, different so that the elastomer sealing ring 58 is exposed on top of the lower seal moulding 60 for sealingly engaging the underside of the heating element 55.

As with the preceding embodiments, the heating element and seal assembly is arranged to be secured in the vessel by means of a circlip 62 having formations 63 adapted to engage with slots 64 formed in the appliance body.

In the embodiment of Figures 7A and 7B, the plain elastomer seal 58 could be replaced by a multilayer structure providing a plurality of seal fingers in contact with the vessel wall as in the previously described embodiments, elastomeric layers in such a multilayer structure possibly being separated by thermoplastics material spacers so as better to simulate a multiple seal as previously described. Additionally, the seal mouldings 59 and 60 or either of them, could be profiled to enhance the sealing effect between them and/or between the heating element 55 and the lower seal moulding 60.

In the embodiments hereinafter described, the heating element that is to be installed into a liquid heating vessel is formed as a completely flat plate and is to be contrasted with the heating elements that are described previously herein which require the provision of specially formed peripheral flanges for the purpose of seal accommodation. A flat plate heating element, with no peripheral flanges, provides for minimal material usage for a given heating element diameter and can readily be provided in a range of different diameters. As mentioned previously herein, an exemplary form of such a flat plate heating element comprises a stainless steel plate having an electrically resistive track or layer provided on one side thereof, generally the side which is undermost in use, the resistive track or layer being insulated from the stainless steel plate by provision of a layer of an electrically insulating material such as glass for example therebetween, a further electrically insulating layer advantageously overlying the resistive track or layer. Other kinds of flat plate heating elements could be installed according to the same teachings, however.

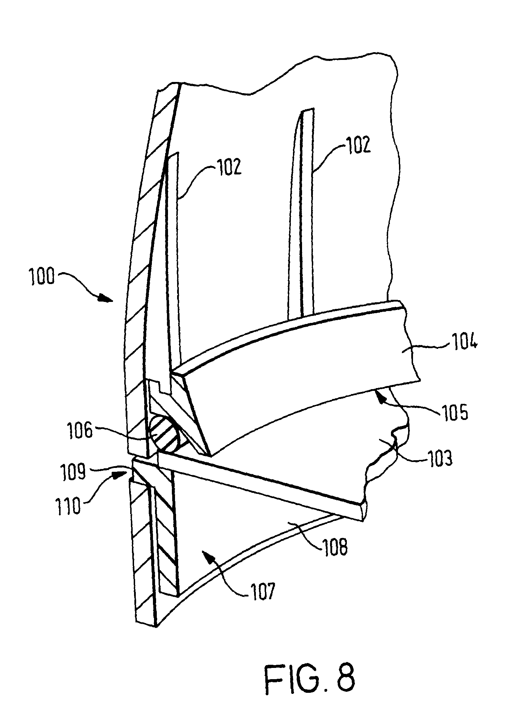

Figure 8 shows a vessel 100 provided with a plurality of internal integrally-formed ribs 102 as described hereinbefore. However, in the present arrangement the ribs serve to locate a seal support ring 104 which is formed so as to engage with undercuts provided in the bottom ends of the ribs 102 as shown. The seal support ring 104 has a lower edge 105 which defines an abutment for the heating element 103 and furthermore is shaped to define a location for an O-ring seal 106 which is compressed as the heating element 103 is urged towards the seal support ring 104 and serves to provide a seal not only between the seal support ring 104 and the heating element 103, but also between the seal support ring 104 and the internal wall of the vessel 100. To hold the heating element 103 in position with the seal 106 compressed, a circlip 107 is provided in the form of a resilient annular skirt 108 having outwardly-projecting formations 109 arranged to engage in openings 110 that are provided in the vessel wall, the circlip 107 being inserted into the open bottom of the vessel.

The seal support ring 104 can be formed of the same material as the vessel wall so as to have the same coefficient of thermal expansion and ensure the viability of the seal arrangement over the operating temperature range of the vessel. The seal 106 is shown as having a circular cross-section but other seal cross-sections could equally well be employed, possibly with some reshaping of the seal support ring 104 to ensure the efficacy of the seal. The seal support ring 104 may be a full circle (annulus) or may be gapped to permit constructional tolerances in the vessel body 100 to be accommodated. The gap in the seal support ring 104 may have overlapping end features to ensure continuous support for the seal 106. The circlip 107 could be differently formed, but the form shown, namely with a deep axial section (skirt) 108 and a narrow radial section (formations) 109, ensures that the circlip does not excessively overlap the undersurface of the heating element 103 This can be advantageous, particularly with small diameter heating elements, around 110mm diameter for example, since it leaves the maximum amount of room on the heating element for the attachment thereto of an electrical inlet connector. the Otter Controls CP7 360° connector for example, and a dry boil protector, the Otter Controls X2 thermal control for example

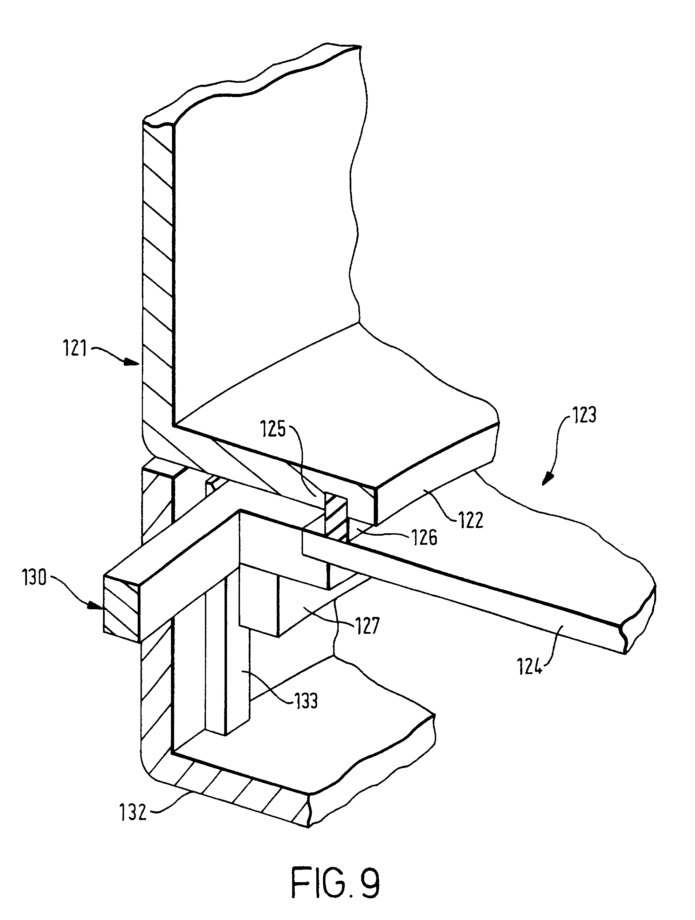

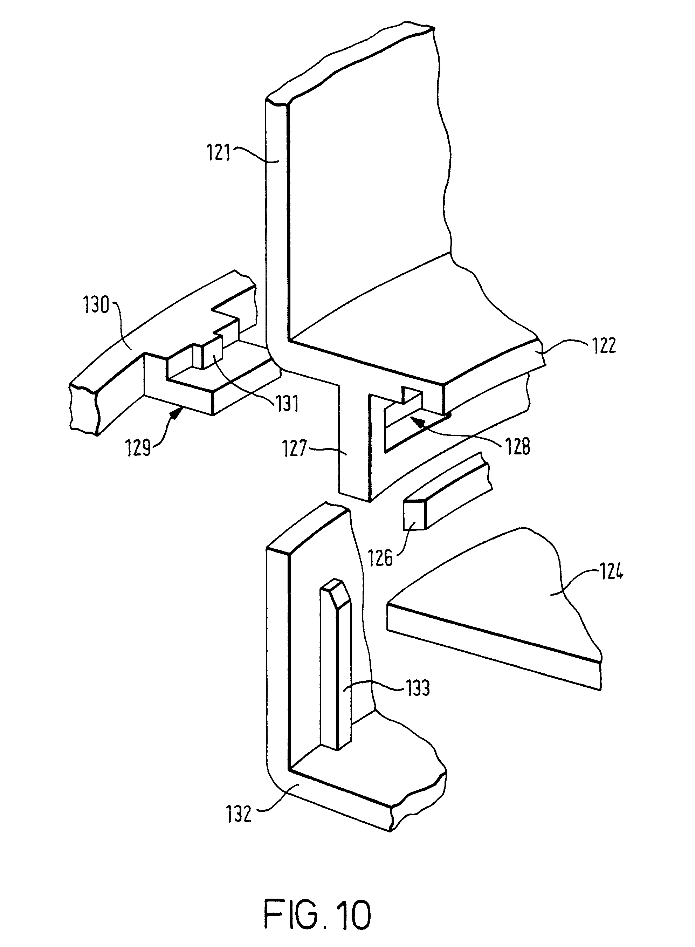

Figures 9 and 10 show a fifth embodiment of the present invention. In this embodiment, the vessel body 121 has an inwardly directed flange 122 defining an opening 123 for a planar heating element 124, the flange 122 either being formed integrally with the vessel or being separately formed and welded thereto. The flange 122 serves in this embodiment the function of the seal support ring 104 of the embodiment of Figure 8 and has an annular groove 125 moulded into it to support and locate a rectangular section sealing ring 126 The moulding has a vertical annular rib 127 (see Figure 10) below and outboard of the opening 123 in the vessel base and this rib 127 has formed therein a plurality of locating apertures 128 for accommodating inwardly directed lugs 129 of external circlip 130.

In assembly of the Figures 9 and 10 embodiment, the seal 126 is located in its groove 125 and the heating element 124 is placed on the seal and is pressed to compress the seal. The circlip 130 is formed as an external circlip and its locating lugs 129 pass through the apertures 128 in the rib 127 and support the underside of the heating element 124 substantially without obscuring its surface. The lugs 129 of the circlip, in addition to having portions adapted to overlap the heating element and retain it with the seal compressed, also have small protuberances 131 which are designed to abut the periphery of the heating element, thus locating it centrally within the vessel and preventing, or minimising, contact between the heating element and the material of the vessel wall. The heating element 124 is thus supported both axially and radially by the circlip 130 which is made from a material with suitable thermal and mechanical properties so as to be capable of readily withstanding the temperatures generated by the heating element.

A cosmetic lower body moulding 132 is provided to cover the element assembly and may be attached to the appliance inlet connector (for example the Otter Controls CP7 360° inlet connector) and its mounting bracket or may be attached to either the circlip 130 or the rib 127. The lower body moulding 132 may have internal ribs 133 or other features which engage the outside diameter of the circlip 130 and prevent it from opening and coming out of contact with the heating element 124

Having thus described the present invention by reference to exemplary embodiments, it is to be well appreciated that modifications and variations are possible without departure from the scope of the invention. For example, the embodiment of Figures 9 and 10 could be modified if desired to employ an internal circlip rather than the external circlip that is described, and the previously described embodiments which employ an internal circlip could be modified if desired to employ an external circlip Where an internal circlip was utilized, the apertures that are engaged by the outwardly-directed formations on the circlip could be replaced by an internal groove formed in the inner surface of the vessel wall and the circlip could simply be designed to engage with the groove. This option would leave the outside of the vessel free of marks and steps which could be aesthetically pleasing and might eliminate the need for a cosmetic upwards extension of the base cover. Furthermore, whilst the seal in both the fourth and fifth embodiments has been shown as being of solid cross-section, it could be hollow or formed of a closed-cell material so as to be relatively soft to reduce the force necessary to compress it to achieve a seal.

## Claims

1. An electrically heated vessel comprising a vessel body (1;121) for containing liquid that is to be heated and a planar heating element (2;103;124) secured against abutment means (18;102,104;122) provided within the vessel body, **characterized in that** the planar heating element (2;103;124) is secured by means of a circlip (18;107;130) which engages the vessel body, said circlip (18) serving as said abutment means (18), or said circlip (107;130) serving to hold the heating element (103) against said abutment means (102,104;122).

2. An electrically heated vessel as claimed in claim 1 wherein said circlip comprises a split ring, variable diameter locking element (18;107;130).

3. An electrically heated vessel as claimed in claim 1 or 2 wherein said circlip (18;107;130) has formations (21;109;129) engaged with complementary formations (20;110;128) in the vessel wall so as to retain the heating element (2;103;124).

4. An electrically heated vessel as claimed in claim 1 or 2 or 3 wherein a resilient seal (11;106) is provided around the heating element (2;103) for sealing the periphery thereof with respect to the vessel wall.

5. An electrically heated vessel as claimed in claim 4 wherein the heating element (2) has a planar portion (3) and a transverse peripheral flange portion (9), said flange portion (9) facing and being spaced apart from the internal wall surface of the vessel body (1) and the resilient seal (11) being assembled to said transverse flange portion (9) and sealing the space between the flange portion (9) and the internal wall surface of the vessel body (1).

6. An electrically heated vessel as claimed in claim 5 wherein the seal (11) has a plurality of spaced apart fins (13) extending outwardly from said flange portion (9) and into contact with the internal wall surface of the vessel body (1).

7. An electrically heated vessel as claimed in any of the preceding claims
wherein the heating element (2) comprises a heating element proper secured within an annular mounting member (35) and the circlip (18) serves to hold the annular mounting member (35) and not the heating element proper.

8. An electrically heated vessel as claimed in claim 7 wherein the annular mounting member (35) is formed of a rigid plastics material.

9. An electrically heated vessel as claimed in claim 8 as dependent upon claim 4 or 5 or 6 wherein the resilient seal (11) is integral with the rigid plastics material mounting member (35).

10. An electrically heated vessel as claimed in claim 9 wherein the resilient seal (11) and the rigid plastics material mounting member (35) are made integral by virtue of being moulded together.

11. An electrically heated vessel as claimed in claim 9 wherein the resilient seal (11) and the rigid plastics material mounting member (35) are mechanically integrated.

12. An electrically heated vessel as claimed in claim 11 wherein the rigid plastics material mounting member comprises upper and lower parts (59,60) sandwiching the resilient seal (58) therebetween.

13. An electrically heated vessel as claimed in claim 4 wherein the vessel body (1) is provided with an abutment surface (105;125) extending around the interior thereof, a resilient seal (106;126) underlies the abutment surface (105;125), and the heating element (103;124) periphery compresses the seal (106;126) against the abutment surface (105;125).

14. An electrically heated vessel as claimed in claim 13 wherein the vessel body (1) has a plurality of integrally formed abutments (102) spaced about its internal wall surface, a seal support ring (104) is abutted with said abutments (102) and the resilient seal (106) is compressed between the upper surface of the heating element (103) and the under surface of the seal support ring (104) so as to seal the heating element (103) with respect to the vessel wall.

15. An electrically heated vessel as claimed in any of the preceding claims wherein the circlip (18;107) locates within the vessel body.

16. An electrically heated vessel as claimed in any of claims 1 to 14 wherein the circlip (130) locates outside of the vessel body (121) and has formations (129) which extend through openings (128) formed in the vessel body for securing the heating element (124) in the vessel body (121).

17. An electrically heated vessel as claimed in any of the preceding claims wherein the heating element (2) is formed so as to define a peripheral sump (7).

18. An electrically heated vessel as claimed in any of the preceding claims wherein the heating element (2) comprises a metal plate having a resistance heating element secured to the undersurface thereof.

19. An electrically heated vessel as claimed in any of claims 1 to 17 wherein the heating element (103;124) is a thick film heating element.

20. An electrically heated vessel as claimed in any of the preceding claims wherein the vessel body (1) is tapering with a wide base and a narrow top, the circlip (18) underlies the heating element (2) and means (25-29) are provided urging the heating element down towards the circlip (18).

21. An electrically heated vessel as claimed in claim 20 wherein a base part (28) of the vessel body (1) is coupled to the heating element (2) and, by reaction with an upper part of the vessel body (1), develops a force urging the heating element (2) downwardly towards the base of the vessel.

22. An electrically heated vessel as claimed in claim 21 wherein a heating element overtemperature protection device (25) and/or an electrical supply input connector (26) is coupled to the heating element (2) for disconnecting the heating element from its power supply when the temperature of the beating element exceeds a predetermined level, and said overtemperature protection device (25) is coupled to said base part (28) to develop said force.

23. An electrically heated vessel as claimed in any of the preceding claims in the form of a cordless appliance comprising a vessel part and a base part, the vessel part comprising said vessel body (1) and having an electrical supply input connector (26) for supplying electricity to the heating element (2) when the vessel part is seated on the base part and the connector (26) on the vessel part is mated with a complementary electrical supply output connector provided in the base part.

24. An electrically heated vessel as claimed in any of the preceding claims where a cosmetic lower body part (132) is provided which covers the locations whereat the circlip (130) engages the vessel body.

## Patentansprüche

1. Elektrisch beheizter Kessel mit einem Kesselkörper (1; 121) zum Aufnehmen von zu erhitzender Flüssigkeit und einem ebenen Heizelement (2; 103; 124), das gegen eine innerhalb des Kesselkörpers vorhandene Widerlagervorrichtung (18; 192, 104, 122) gesichert ist,
**dadurch gekennzeichnet, dass**
das ebene Heizelement (2; 103; 124) durch einen Sicherungsring (18; 107; 130), der am Kesselkörper angreift, gesichert ist, wobei der Sicherungsring (18) als Widerlagervorrichtung (18) dient, oder der Sicherungsring (107; 130) dazu dient, das Heizelement (103) gegen die Widerlagervorrichtung (102, 104; 122) zu halten.

2. Kessel nach Anspruch 1, wobei der Sicherungsring einen Spaltring, ein Verschlusselement (18; 107; 130) mit variablem Durchmesser umfasst.

3. Kessel nach Anspruch 1 oder 2, wobei der Sicherungsring (18; 107; 130) geformte Elemente (21; 109; 129) aufweist, die mit komplementär geformten Elementen (20; 110; 128) in der Kesselwand in Eingriff stehen, so dass das Heizelement (2; 103; 124) gehalten ist.

4. Kessel nach Anspruch 1, 2 oder 3, wobei eine elastische Dichtung (11; 106) rund um das Heizelement (2; 103) vorgesehen sind, um dessen Umgebung bezüglich der Kesselwand abzudichten.

5. Kessel nach Anspruch 4, wobei das Heizelement (2) einen ebenen Anteil (3) und einen transversalen peripheren Flanschanteil (9) aufweist, wobei der Flanschanteil (9) zur Innenwand des Kesselkörpers (1) zeigt und von ihr getrennt ist, und die elastische Dichtung (11) an dem transversalen Flanschanteil (9) angeordnet ist und den Raum zwischen Flanschanteil (9) und Innenwandfläche des Kesselkörpers (1) abdichtet.

6. Kessel nach Anspruch 5, wobei die Dichtung (11) mehrere voneinander getrennte Lamellen (13) aufweist, die von dem Flanschanteil (9) nach außen verlaufen und mit der Innenwandfläche des Kesselkörpers (1) in Kontakt sind.

7. Kessel nach einem der vorhergehenden Ansprüche, wobei das Heizelement (2) ein eigentliches Heizelement umfasst, das innerhalb eines kreisförmigen Befestigungselements (35) befestigt ist, wobei der Sicherungsring (18) dazu dient, das kreisförmige Befestigungselement (35) und nicht das eigentliche Heizelement zu halten.

8. Kessel nach Anspruch 7, wobei das kreisförmige Befestigungselement (35) aus einem starren Plastikmaterial geformt ist.

9. Kessel nach Anspruch 8, soweit abhängig von Anspruch 4 oder 5 oder 6, wobei die elastische Dichtung (11) integral mit dem starren Plastikmaterial-Befestigungselement (35) ausgebildet ist.

10. Kessel nach Anspruch 9, wobei die elastische Dichtung (11) und das starre Plastikmaterial-Befestigungselement (35) miteinander integral ausgebildet sind, indem sie zusammengeformt sind.

11. Kessel nach Anspruch 9, wobei die elastische Dichtung (11) und das starre Plastikmaterial-Befestigungselement (35) mechanisch integral ausgebildet sind.

12. Kessel nach Anspruch 11, wobei das starre Plastikmaterial-Befestigungselement einen oberen und einen unteren Teil (59, 60) aufweist, die die elastische Dichtung (58) zwischen sich aufnehmen.

13. Kessel nach Anspruch 4, wobei der Kesselkörper (1) mit einer Widerlagerfläche (105; 125) ausgestattet ist, die sich rund um sein Inneres erstreckt, eine elastische Dichtung (106; 126) unter der Widerlagerfläche (105; 125) liegt, und das Heizelement (103; 124) peripher die Dichtung (106; 126) gegen die Widerlagerfläche (105; 125) zusammenpresst.

14. Kessel nach Anspruch 13, wobei der Kesselkörper (1) mehrere integral ausgebildete Widerlager (102) aufweist, die rund um seine innere Wandfläche beabstandet angeordnet sind, ein Dichtungsunterstützungsring (104) an die Widerlager (102) anstößt, und die elastische Dichtung (106) zwischen der oberen Fläche des Heizelements (103) und der Unterfläche des Dichtungsunterstützungsrings (104) zusammengepresst wird, so dass das Heizelement (103) bezüglich des Kesselrands abgedichtet ist.

15. Kessel nach einem der vorhergehenden Ansprüche, wobei der Sicherungsring (18; 107) innerhalb des Kesselkörpers angeordnet ist.

16. Kessel nach einem der Ansprüche 1 bis 14, wobei der Sicherungsring (113) außerhalb des Kesselkörpers (121) angeordnet ist und eine Ausbildung (129) aufweist, die durch in dem Kesselkörper ausgebildete Öffnungen (128) verläuft, um das Heizelement (124) in dem Kesselkörper (121) zu befestigen.

17. Kessel nach einem der vorhergehenden Ansprüche, wobei das Heizelement (2) derart ausgebildet ist, dass es eine periphere Vertiefung (7) bildet.

18. Kessel nach einem der vorhergehenden Ansprüche, wobei das Heizelement (2) eine Metallplatte mit einem an seiner Unterseite befestigten Widerstandsheizelement aufweist.

19. Kessel nach einem der Ansprüche 1 bis 17, wobei das Heizelement (103; 124) ein Dickfilm-Heizelement ist.

20. Kessel nach einem der vorhergehenden Ansprüche, wobei der Kesselkörper (1) sich von einem breiten Boden zu einem engen Oberteil verengt, der Sicherungsring (18) unter dem Heizelement (2) liegt und Vorrichtungen (25 bis 29) vorgesehen sind, um das Heizelement in Richtung des Sicherungsrings nach unten zu drücken.

21. Kessel nach Anspruch 20, wobei ein Bodenteil (28) des Kesselkörpers (1) mit dem Heizelement (2) verbunden ist und durch Zusammenwirken mit einem oberen Teil des Kesselkörpers (1) eine Kraft entwickelt wird, die das Heizelement (2) nach unten in Richtung des Kesselbodens drückt.

22. Kessel nach Anspruch 21, wobei eine Heizelement-Überhitzschutzvorrichtung (25) und/oder ein Elektrizitätsversorgungseingangsverbinder (26) mit dem Heizelement (2) verbunden ist, um das Heizelement von der Energieversorgung zu trennen, wenn die Temperatur des Heizelements einen vorbestimmten Schwellenwert überschreitet, und wobei die Überhitzschutzvorrichtung (25) mit dem Bodenteil (28) verbunden ist, um die Kraft zu entwickeln.

23. Kessel nach einem der vorhergehenden Ansprüche in Form eines schnurlosen Geräts mit einem Kesselteil und einem Basisteil, wobei das Kesselteil den Kesselkörper (1) und einen Elektrizitätsversorgungseingangsverbinder (26) zum Versorgen des Heizelements (2) mit Elektrizität aufweist, wenn das Kesselteil auf dem Basisteil angeordnet ist und der Verbinder (26) an dem Kesselteil mit einem komplementären auf dem Basisteil vorgesehenen Elektrizitätsversorgungsausgangsverbinder zusammenwirkt.

24. Kessel nach einem der vorhergehenden Ansprüche, wobei ein unterer Verschönerungskörperteil (132) vorgesehen ist, der die Stellen bedeckt, an welchen der Sicherungsring (130) mit dem Kesselkörper in Verbindung steht.

## Revendications

1. Cuve chauffée électriquement comprenant un corps de cuve (1; 121) pour contenir un liquide qui doit être chauffé et un élément chauffant plan (2 ; 103 ; 124) fixé contre un moyen de butée (18 ; 102, 104 ; 122) disposé dans le corps de cuve, **caractérisée en ce que** l'élément chauffant plan (2 ; 103 ; 124) est fixé au moyen d'un anneau élastique (18 ; 107 ; 130) qui met en prise le corps de cuve, ledit anneau élastique (18) servant dudit moyen de butée (18), ou ledit anneau élastique (107 ; 130) servant à maintenir l'élément chauffant (103) contre ledit moyen de butée (102, 104 ; 122).

2. Cuve chauffée électriquement selon la revendication 1 dans laquelle ledit anneau élastique comprend un élément de verrouillage de diamètre variable à bague fendue (18 ; 107 ; 130).

3. Cuve chauffée électriquement selon la revendication 1 ou 2 dans laquelle ledit anneau élastique (18 ; 107 ; 130) a des formations (21 ; 109 ; 129) mises en prise avec des formations complémentaires (20 ; 110 ; 128) dans la paroi de la cuve de manière à retenir l'élément chauffant (2 ; 103 ; 124).

4. Cuve chauffée électriquement selon la revendication 1 ou 2 ou 3 dans laquelle un joint élastique (11 ; 106) est disposé autour de l'élément chauffant (2 ; 103) pour étanchéifier la périphérie de celui-ci par rapport à la paroi de la cuve.

5. Cuve chauffée électriquement selon la revendication 4 dans laquelle l'élément chauffant (2) a une partie plane (3) et une partie de rebord périphérique transversal (9), ladite partie de rebord (9) faisant face et étant espacée de la surface de paroi interne du corps de cuve (1) et le joint élastique (11) étant assemblé à ladite partie de rebord transversal (9) et étanchéifiant l'espace entre la partie de rebord (9) et la surface de paroi interne du corps de cuve (1).

6. Cuve chauffée électriquement selon la revendication 4 dans laquelle le joint (11) a une pluralité d'ailettes espacées (13) s'étendant vers l'extérieur depuis ladite partie de rebord (9) et en contact avec la surface de paroi interne du corps de cuve (1).

7. Cuve chauffée électriquement selon l'une quelconque des revendications précédentes dans laquelle l'élément chauffant (2) comprend un élément chauffant propre fixé dans un élément de montage annulaire (35) et l'anneau élastique (18) sert à maintenir l'élément de montage annulaire (35) et non l'élément chauffant lui-même.

8. Cuve chauffée électriquement selon la revendication 7 dans laquelle l'élément de montage annulaire (35) est formé d'une matière plastique rigide.

9. Cuve chauffée électriquement selon la revendication 8 dépendante de la revendication 4 ou 5 ou 6 dans laquelle le joint élastique (11) est intégré avec l'élément de montage en matière plastique rigide (35).

10. Cuve chauffée électriquement selon la revendication 9 dans laquelle le joint élastique (11) et l'élément de montage en matière plastique rigide (35) sont intégrés grâce au fait qu'ils sont moulés conjointement.

11. Cuve chauffée électriquement selon la revendication 9 dans laquelle le joint élastique (11) et l'élément de montage en matière plastique rigide (35) sont intégrés mécaniquement.

12. Cuve chauffée électriquement selon la revendication 11 dans laquelle l'élément de montage en matière plastique rigide comprend des parties supérieure et inférieure (59, 60) maintenant en sandwich le joint élastique (58) entre celles-ci.

13. Cuve chauffée électriquement selon la revendication 4 dans laquelle le corps de cuve (1) est pourvu d'une surface de butée (105 ; 125) s'étendant autour de l'intérieur de celui-ci, un joint élastique (106 ; 126) est sous-jacent à la surface de butée (105 ; 125), et la périphérie de l'élément chauffant (103 ; 124) comprime le joint (106 ; 126) contre la surface de butée (105 ; 125).

14. Cuve chauffée électriquement selon la revendication 13 dans laquelle le corps de cuve
(1) a une pluralité de butées formées de manière intégrée (102) espacées autour de sa surface de paroi interne, une bague de support de joint (104) est en butée contre lesdites butées (102) et le joint élastique (106) est comprimé entre la surface supérieure de l'élément chauffant (103) et la surface inférieure de la bague de support de joint (104) de manière à étanchéifier l'élément chauffant (103) par rapport à la paroi de la cuve.

15. Cuve chauffée électriquement selon l'une des revendications précédentes dans laquelle l'anneau élastique (18, 107) est situé dans le corps de cuve.

16. Cuve chauffée électriquement selon l'une quelconque des revendications 1 à 14 dans laquelle l'anneau élastique (130) est situé à l'extérieur du corps de cuve (121) et a des formations (129) qui s'étendent par des ouvertures (128) formées dans le corps de cuve pour fixer les éléments chauffants (124) dans le corps de cuve (121).

17. Cuve chauffée électriquement selon l'une quelconque des revendications précédentes dans laquelle l'élément chauffant (2) est formé de manière à définir un carter périphérique (7).

18. Cuve chauffée électriquement selon l'une quelconque des revendications précédentes dans laquelle l'élément chauffant (2) comprend une plaque de métal ayant un élément chauffant à résistance fixé à la surface inférieure de celui-ci.

19. Cuve chauffée électriquement selon l'une quelconque des revendications 1 à 17 dans laquelle l'élément chauffant (103 ; 124) est un élément chauffant en couche épaisse.

20. Cuve chauffée électriquement selon l'une quelconque des revendications précédentes dans laquelle le corps de cuve (1) est conique avec une base large et un sommet étroit, l'anneau élastique (18) est sous-jacent à l'élément chauffant (2) et des moyens (25 à 29) sont disposés pour abaisser l'élément chauffant vers l'anneau élastique (18).

21. Cuve chauffée électriquement selon la revendication 20 dans laquelle une partie de base (28) du corps de cuve (1) est couplée à l'élément chauffant (2) et, par réaction avec une partie supérieure du corps de cuve (1), développe une force abaissant l'élément chauffant (2) vers la base de la cuve.

22. Cuve chauffée électriquement selon la revendication 21 dans laquelle un dispositif de protection contre la surchauffe d'élément chauffant (25) et/ou un connecteur d'entrée d'alimentation électrique (26) est couplé à l'élément chauffant (2) pour déconnecter l'élément chauffant de son alimentation électrique lorsque la température de l'élément chauffant dépasse un niveau prédéterminé, et ledit dispositif de protection contre la surchauffe (25) est couplé à ladite partie de base (28) pour développer ladite force.

23. Cuve chauffée électriquement selon l'une quelconque des revendications précédentes sous la forme d'un appareil sans fil comprenant une partie de cuve et une partie de base, la partie de cuve comprenant ledit corps de cuve (1) et ayant un connecteur d'entrée d'alimentation électrique (26) pour fournir de l'électricité à l'élément chauffant (2) lorsque la partie de cuve est installée sur la partie de base et le connecteur (26) sur la partie de cuve est accouplée avec un connecteur de sortie d'alimentation électrique complémentaire disposé dans la partie de base.

24. Cuve chauffée électriquement selon l'une quelconque des revendications précédentes dans laquelle une partie de corps inférieure esthétique (132) est disposée qui couvre les emplacements auxquels l'anneau élastique (130) met en prise le corps de cuve.
